# EUROPEAN PATENT SPECIFICATION

(11) **EP 0 562 413 B1**
(45) Date of publication and mention of the grant of the patent: **07.05.2008**
(21) Application number: 93104210.5
(22) Date of filing: 16.03.1993
(51) Int. Cl.: H04N 5/445

(54) **Circuit for synchronizing an on-screen-display (OSD) on a picture screen**
Schaltung zur Synchronisierung von einer Anzeige auf einem Bildschirm
Circuit pour synchroniser un système d'affichage sur écran

(30) Priority: 25.03.1992 EP 92400814
(43) Date of publication of application: 29.09.1993
(73) Proprietor: THOMSON multimedia, 92648 Boulogne Cédex (FR)
(72) Inventor: Chiok, Huan Seng, Singapore 2264 (SG)
(74) Representative: Brykman, Georges

(56) References cited:
- EP-A- 0 147 981
- EP-A- 0 147 982
- EP-A- 0 148 606
- DE-A- 2 218 897
- GB-A- 2 155 713
- US-A- 4 263 610
- US-A- 4 354 202
- US-A- 4 475 124
- SIEMENS COMPONENTS vol. 25, no. 1 , March 1990 , MUNCHEN DE pages 17 - 21 BROMBA ET AL. 'Picture in Picture - A highly integrated Circuit simplifies the Picture-in-Picture Technique in Television Sets and Video Recorders'
- PATENT ABSTRACTS OF JAPAN vol. 16, no. 254 (E-1213) 09 June 1992 & JP-A-04 054 772 (ADVANTEST) 21 February 1992
- IEEE Transactions on Consumer Electronics, vol. CE-31, no. 3, august 1985, p. 147-155, A. Pery et al.: "A fully automatic multistandard TV chrominance decoder"
- Philips Data Handbook February 1986, Development Data, pages 1291-1299
- SGS-Thomson, data book, February 1989, "circuit for color TV scanning and power supply processor TEA 2029 or 2028", pages 1/10-10/10

## Description

The invention relates to a television receiver according to the introductory part of claim 1, such as the one set forth in GB-A-2 155 713.OSD (On Screen Display) means that characters or symbols generated in an OSD micro-processor are displayed on the screen. Said OSD micro-processor has to be synchronized by horizontal sync. signal and a vertical sync. signal. Generally the horizontal sync. pulse (H) is derived from the line deflection circuit or the heater voltage for picture tube, whereas the vertical sync. pulse (V) is derived from the vertical flyback pulse. Due to the instability of said H and V signals a flicker and jitter arise within the reproduced characters on the screen.
It is an object of the present invention to modify the synchronizing circuit for said OSD micro-processor so that a flicker and jitter within the displayed signals are reduced.
The invention proposes a television receiver according to claim 1.
Such a super sandcastle signal is well known from the man skilled in the art.
Characteristics of such a signal may be found for instance in Data book of SGS THOMSON of February 1989 in data for circuit TEA 2029 or 2028 or in Phillips data handbook February 1986 pages 1291-1299.
Such a signal has three levels:
- a level for burst key
- a level for horizontal blanking and
- a level for vertical blanking

It was found out that such a super sandcastle pulse which is generally available within a television receiver at the output of an integrated circuit provides good and stabile relationship between H and V so that flicker and jitter on the screen during OSD do not occur. The circuit for realizing the invention is rather simple. There are necessary only very simple circuits for extracting the H pulse and the V pulse from the super sandcastle pulse which includes both pulses H and V.
In order that the invention may be better understood and easily carried out one embodiment of the invention is shown within connection with a drawing. Within the drawing,
- Fig.1: shows a circuit according to the invention and
- Fig.2: waveforms for illustrating the function of the circuit according to Fig. 1

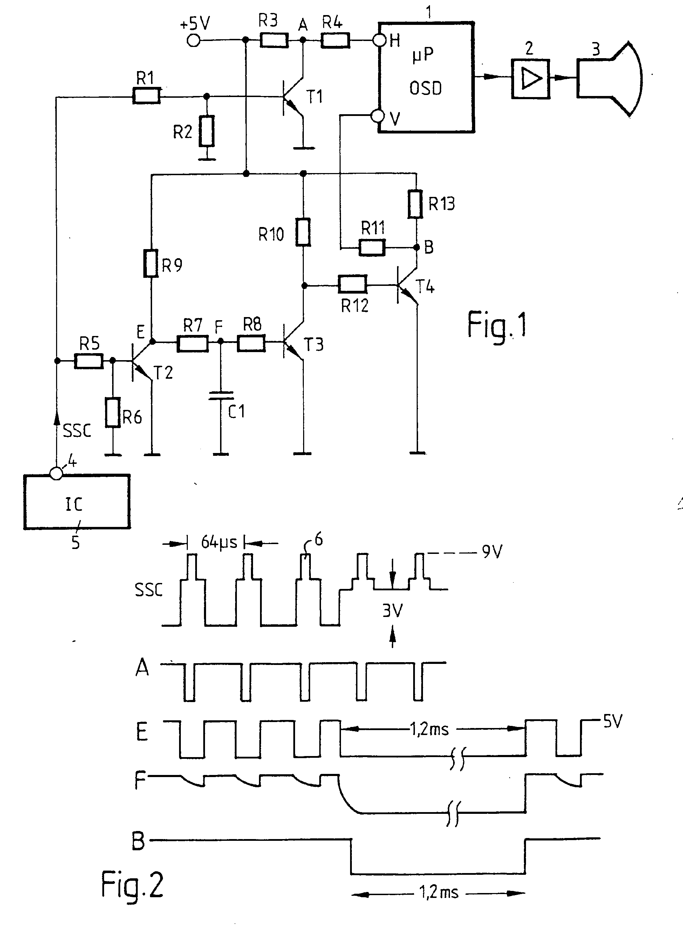

In Fig. 1 an OSD micro-processor 1 is provided which controls via amplifier 2 cathode-ray-tube (CRT) 3 for OSD. Micro-processor 1 provides signals generating characters, symbols and the like on the screen of the picture tube 3. OSD processor 1 has a horizontal sync. input terminal H and a vertical sync. input terminal V for synchronizing OSD.

For synchronization of processor 1 a super sandcastle pulse SSC is derived from output terminal 4 of an integrated circuit 5. The pulse SSC is fed via resistors R1, R2 to base of a transistor T1 the collector of which is connected to + 5 V via a resistor R3 and to terminal H via a resistor R4. Said circuit is so dimensioned and bias that only the short positive pulses 6 of pulse SSC turn on transistor T1 so that waveform A is established at the collector and fed to a horizontal sync. input terminal H of processor 1. Pulse SSC is fed additionally via resistor R5 and R6 to base of transistor T2. Said circuit is dimensioned in bias in such a way that transistor T2 is turned on during pulse SSC being between 0 and 3 volts. A transistor T2 has a function of limiting amplifier so that voltage E appears at collector of T2. During the vertical sync. pulse V pulse SSC does not come below 3 volts so that during this time transistor T2 remains in on condition and voltage E remains zero. By integrating RC network R7, C1 connected to collector of T2 voltage in F is formed and fed via resistor R8 to a base of T3. During vertical forward period said voltage F does not decrease by such an amount that the following circuit T3, T4 is triggered. However, during vertical sync. pulse due to pulse E a voltage F further decreases so that the following circuit is activated and vertical sync. pulse B is produced and fed to vertical sync. input terminal V of OSD processor 1. Transistor T3 is used to shape the waveform for better rise time and fall time and transistor T4 is used to get the correct phase for a pulse B for OSD processor 1.

Within a circuit experimentally tested the element shown had the following values.

R1:86 k (OHM), R2:5 k, R3:6 k, R4:10 k, R5:47k, R6:47k, R7:10 k, R8:10 k, R9:10 k, R10:6 k, R11:10 k, R12:10k, R13:6 k.

## Claims

1. Television receiver equipped with an On Screen Display processor (1) having a horizontal synchronisation input terminal (H) and a vertical synchronisation input terminal (V), **characterised in that** it is further equipped with a source (5) for generating on an output (4) of said source (5) a super sandcastle pulse (SSC), **in that** a first circuit is connected between said output (4) of said source (5) and said horizontal synchronisation input terminal (H), said first circuit extracting from the super sandcastle pulse a horizontal synchronisation signal for feeding the horizontal synchronisation input terminal (H), and **in that** a second circuit (T2-T4) is connected between said output (4) of said source (5) and said vertical synchronisation input terminal (V), said second circuit extracting from the super sandcastle pulse a vertical synchronisation signal for feeding the vertical synchronisation input terminal (V).

2. Television receiver according to claim 1, wherein said first (T1) circuit includes a threshold circuit having such a bias that horizontal sync. pulses only are produced at the output.

3. Television receiver according to claim 1, wherein said second circuit (T2-T4) includes an RC-integration network (R7, C1) and a subsequent threshold circuit having such a bias that vertical sync. pulses (B) only are produced at the output.

4. Television receiver according to claim 1, wherein said second circuit includes a limiting amplifier (T2) fed by the super sandcastle pulse (SSC), a subsequent RC-integration circuit (R7, C1), a subsequent threshold circuit and a subsequent pulse shaper, the output of which is connected to the vertical sync. input terminal (V) of the OSD processor (1).

## Patentansprüche

1. Fernsehempfänger mit einem Prozessor (1) für eine Bildschirmwiedergabe (OSD) mit einer Eingangsklemme (H) für die Horizontalsynchronisierung und einer Eingangsklemme (V) für die Vertikalsynchronisierung,
**gekennzeichnet**
**durch** eine Quelle (5) zum Erzeugen eines Super-Sandcastle-Impulses (SSC) an einem Ausgang (4) der Quelle (5),
**durch** eine erste Schaltung zwischen dem Ausgang (4) der Quelle (5) und der Eingangsklemme (H) für die Horizontalsynchronsierung, wobei die erste Schaltung aus dem Super-Sandcastle-Impuls ein Horizontalsynchronsignal zur Speisung der Eingangsklemme (H) für die Horizontalsynchronisierung extrahiert, und
**durch** eine zweite Schaltung (T2-T4) zwischen dem Ausgang (4) der Quelle (5) und der Eingangsklemme (V) für die Vertikalsynchronisierung, und wobei die zweite Schaltung aus dem Super-Sandcastle-Impuls ein Vertikalsynchronsignal zur Speisung der Eingangsklemme (V) für die Vertikalsynchronisierung extrahiert.

2. Fernsehempfänger nach Anspruch 1, wobei die erste (T1) Schaltung eine Schwellwertschaltung mit einer derartigen Vorspannung enthält, daß an dem Ausgang nur die Horizontalsynchronimpulse erzeugt werden.

3. Fernsehempfänger nach Anspruch 1, wobei die zweite Schaltung (T2-T4) ein RClntegrationsnetzwerk (R7, C1) und eine darauffolgende Schwellwertschaltung mit einer derartigen Vorspannung enthält, daß an dem Ausgang nur Vertikalsynchronimpulse (B) erzeugt werden.

4. Fernsehempfänger nach Anspruch 1, wobei die zweite Schaltung einen durch den Super-Sandcastle-Impuls (SSC) gespeisten Begrenzungsverstärker (T2), eine darauffolgende RC-Integrationsschaltung (R7, C1), eine darauffolgende Schwellwertschaltung und einen darauffolgenden Impulsformer enthält, dessen Ausgang an die Eingangsklemme (V) des OSD-Prozessors (1) für das Vertikalsynchronsignal angeschlossen ist.

## Revendications

1. Récepteur de télévision équipé d'un processeur d'Affichage sur Ecran (1) ayant une borne d'entrée de synchronisation horizontale (H) et une borne d'entrée de synchronisation verticale (V),
**caractérisé en ce qu'**il est en outre équipé d'une source (5) pour générer sur une sortie (4) de ladite source (5) une super impulsion crénelée (SSC), **en ce qu'**un premier circuit est connecté entre ladite sortie (4) de ladite source (5) et ladite borne d'entrée de synchronisation horizontale (H), ledit premier circuit extrayant à partir de la super impulsion crénelée un signal de synchronisation horizontale à passer à la borne d'entrée de synchronisation horizontale (H), et **en ce qu'**un deuxième circuit (T2 à T4) est connecté entre ladite sortie (4) de ladite source (5) et ladite borne d'entrée de synchronisation verticale (V), ledit deuxième circuit extrayant à partir de la super impulsion crénelée un signal de synchronisation verticale à passer à la borne d'entrée de synchronisation verticale (V).

2. Récepteur de télévision selon la revendication 1, dans lequel ledit premier circuit (T1) comporte un circuit de seuil qui a une polarisation telle que seules des impulsions de synchronisation horizontale sont produites à la sortie.

3. Récepteur de télévision selon la revendication 1, dans lequel ledit deuxième circuit (T2 à T4) comporte un réseau d'intégration RC (R7, C1) et un circuit de seuil suivant qui a une polarisation telle que seules des impulsions de synchronisation verticale (B) sont produites à la sortie.

4. Récepteur de télévision selon la revendication 1, dans lequel ledit deuxième circuit comporte un amplificateur limiteur (T2) alimenté par la super impulsion crénelée (SSC), un circuit d'intégration RC suivant (R7, C1), un circuit de seuil suivant et un conformateur d'impulsion suivant, dont la sortie est connectée à la borne d'entrée de synchronisation verticale (V) du processeur OSD (1).
